# FASCICULE DE BREVET EUROPEEN

(11) **EP 3 199 409 B1**
(45) Date de publication et mention de la délivrance du brevet: **31.07.2019**
(21) Numéro de dépôt: 17152640.3
(22) Date de dépôt: 23.01.2017
(51) Int. Cl.: B60R 19/18, B60R 19/52, B60R 21/34

(54) **ÉLÉMENT DE MOULE DE GRILLE D'AÉRATION POUR FACE AVANT DE VÉHICULE AUTOMOBILE**
FORMELEMENT EINES BELÜFTUNGSGITTERS FÜR DIE FRONTSEITE EINES KRAFTFAHRZEUGS
AIR-VENT MOULD ELEMENT FOR FRONT END OF A MOTOR VEHICLE

(30) Priorité: 28.01.2016 FR 1650685
(43) Date de publication de la demande: 02.08.2017
(73) Titulaire: Renault s.a.s, 92100 Boulogne-Billancourt (FR)
(72) Inventeur: MICHEL, LIONEL, 78180 MONTIGNY LE BRETONNEUX (FR); OBMALAY, SENGDARA, 78100 SAINT GERMAIN EN LAYE (FR)

(56) Documents cités:
- EP-A2- 1 602 537
- FR-A1- 2 805 504
- FR-A1- 2 888 545
- US-A1- 2005 017 520

## Description

L'invention a pour objet les faces avant de véhicule automobile, et plus particulièrement les grilles d'aération pour face avant de véhicule automobile. Les faces avant de véhicule automobile intègrent généralement des aérations prévues pour refroidir des éléments moteurs du véhicule, et également pour alimenter en air l'habitacle du véhicule. Ces faces avant intègrent également des fonctions aérodynamiques et esthétiques, en partie assurées par la forme extérieure du bouclier avant, définissant l'extrémité avant du profil du véhicule. Ces faces avant doivent, de plus en plus, intégrer également des fonctions de protection, aussi bien de protection du véhicule que de protection d'éventuels piétons qui pourraient venir en collision avec le véhicule. Ainsi, entre la caisse de véhicule et le bouclier de pare-chocs, trouve-t-on différents types d'éléments absorbeurs d'énergie, destinés, pour certains, à dissiper une partie de l'énergie d'éventuels chocs du véhicule contre un obstacle inerte ou un autre véhicule, afin de limiter l'impact d'un choc avant du véhicule sur les passagers du véhicule, et destinés pour d'autres absorbeurs, à se déformer en limitant l'énergie d'un pic de décélération d'un objet ou d'une personne venant en contact brutal avec le pare-chocs, de manière à limiter les dommages à cet objet ou cette personne. Le document US 2005/017520 A1 décrit un élément de grille d'aération pour face avant d'un véhicule automobile conforme au préambule de la revendication 1.

L'invention a pour but de proposer un nouvel élément de face avant permettant d'intégrer conjointement de manière économique, avec une efficacité améliorée de tenue au choc, plusieurs des fonctions mentionnées précédemment.

Selon l'invention, un élément moulé formant grille d'aération pour face avant de véhicule automobile, comprend une portion ajourée formant grille d'aération et s'étendant sur une première profondeur suivant la direction d'avancement du véhicule, et comprend, moulé monobloc dans la même pièce que la portion ajourée, au moins un caisson formant absorbeur de choc, placé de manière à être monté devant une traverse avant du véhicule, le caisson formant poutre creuse à section à contour fermé autour d'un axe de poutre orienté pour être monté sensiblement parallèle à la direction d'avancement du véhicule.

On peut par exemple considérer que pour être apte à absorber suffisamment d'énergie de choc, le caisson peut présenter un plus grand diamètre intérieur de contour fermé de la poutre creuse strictement supérieur, au moins 1,25 fois supérieur, avantageusement au moins 1,5 fois, et par exemple au moins deux fois supérieur à la profondeur de la ou des portions ajourées, et peut présenter une profondeur selon la direction d'avancement du véhicule supérieure ou égale à ce plus grand diamètre.

De manière préférentielle, le rapport entre la profondeur de la portion de poutre à contour fermé et le plus grand diamètre intérieur de la même poutre creuse est compris entre 1,25 et 3. On limite ainsi les effets de flambement de la poutre sous l'effet de la compression de la poutre suivant la direction d'avancement du véhicule.

Avantageusement, la portion formant poutre s'évase vers la face de l'élément 1 qui est destinée à être tournée vers l'avant du véhicule une fois l'élément formant grille assemblé sur le véhicule.

De manière préférentielle, la portion de poutre à section fermée est formée par une surface réglée dont au moins une partie des génératrices sont sensiblement parallèles à l'axe d'avancement (s'écartant de moins de 15° de l'axe longitudinal du véhicule, ou axe d'avancement usuel du véhicule). On considère que la face avant de l'élément est a priori la face ne portant pas les points d'injections de l'élément, et qui est aussi la face moulée avec un état de surface plus régulier. La portion de poutre peut être par exemple conique, avec un angle maximal d'ouverture du cône (angle maximal entre deux génératrices) inférieur ou égal à 30°, avantageusement inférieur ou égale à 20°.

De manière avantageuse, la portion de poutre à section fermée peut se refermer du côté de la face arrière de l'élément, par une portion de surface plane destinée à être positionnée selon une direction sensiblement perpendiculaire à la direction d'avancement du véhicule, une fois l'élément formant grille assemblé sur le véhicule. La portion de surface plane peut comporter une ouverture en son centre.

Il est également proposé un ensemble de face avant de véhicule, comprenant un élément moulé tel que décrit précédemment, ainsi qu'une peau de bouclier configurée pour recouvrir l'extrémité évasée de la portion de poutre une fois la peau de bouclier assemblée sur l'élément formant grille.

Avantageusement, l'élément peut porter sur au moins une portion du pourtour de l'extrémité évasée de la poutre, une rainure ou une nervure complémentaire d'une nervure, respectivement d'une rainure ménagée sur la face arrière de la peau de bouclier
Il est aussi proposé un ensemble de face avant de véhicule comprenant un élément moulé tel que décrit précédemment, ainsi qu'une traverse avant configurée pour être monté face à la portion de surface plane. De manière avantageuse, la portion de surface plane est conçue pour rester espacée de la traverse, sans être assemblée directement à la traverse, pour tenir compte des dispersions dimensionnelles de fabrication.

L'ensemble de face avant peut comporter deux desdites portions de poutres, disposées symétriquement de part et d'autre d'un plan médian longitudinal vertical du véhicule.

L'élément peut comprendre deux desdits caissons, et comprendre entre les caissons, reliant les caissons, au moins une portion de surface de liaison transversale au véhicule.

L'élément peut comprendre deux desdites portions de poutres à contours fermés, chaque portion de poutre étant formée par des portions de parois d'épaisseur sensiblement constante. L'élément peut comprendre entre les portions de poutre, reliant les portions de poutre, une portion de surface de liaison transversale au véhicule, d'épaisseur supérieure ou égale à l'épaisseur de parois des portions de poutres. Selon une variante de réalisation, la portion de liaison de surface transversale relie les contours évasés des deux portions de poutre sur toute la hauteur verticale de ces portions de poutres. Selon une autre variante de réalisation, au moins deux surfaces de liaison parallèles relient respectivement une portion deux portions hautes de chaque contour et deux portions basses de chaque contour. La hauteur verticale s'entend pour la position de l'ensemble de face avant assemblé sur le véhicule. Selon une autre variante de réalisation, l'épaisseur de paroi des portions de poutre peut être décroissante vers l'arrière du véhicule, de manière à localiser la déformation ou la consommation de la portion de poutre dans des sections droites successives au fur et à mesure qu'un effort de compression d'amplitude croissante est appliqué sur la portion de poutre.

Il est aussi proposé un véhicule équipé d'une grille de calandre formée d'une seule pièce avec deux portions formant portion de poutre à contour fermé autour d'un axe intérieur de la portion de poutre sensiblement parallèle à l'axe longitudinal du véhicule, chacune des portion de poutre étant montée de manière à être recouverte à l'avant par une peau de bouclier avant, et de manière à faire face à l'arrière à une poutre transversale avant.

Par axe d'avancement du véhicule, on entend l'axe usuel d'avance ment du véhicule, correspondant à une direction longitudinale fixe par rapport à la carrosserie du véhicule.

Quelques buts, caractéristiques et avantages de l'invention apparaîtront à la lecture de la description suivante, donnée uniquement à titre d'exemple non limitatif, et faite en référence aux figures annexées, sur lesquelles :
- la figure 1 est une vue schématique d'une face avant d'un véhicule, vue par l'avant du véhicule;
- la figure 2 est une vue schématique, vue par l'avant du véhicule, d'une portion de la face avant de la figure 1;
- la figure 3 est une vue schématique en coupe, dans un plan horizontal du véhicule à hauteur d'une traverse du véhicule, d'un élément de face avant selon l'invention;
- la figure 4 est une vue schématique en coupe, dans un plan vertical parallèle à la direction usuelle d'avancement du véhicule, d'un élément de face avant selon l'invention monté sur un véhicule automobile;
- la figure 5 est une vue schématique d'une portion d'un élément de face avant selon l'invention, vue en coupe selon un plan horizontal passant par une ou plusieurs portions de caissons absorbeurs de chocs formant poutres creuses et appartenant à l'élément selon l'invention.

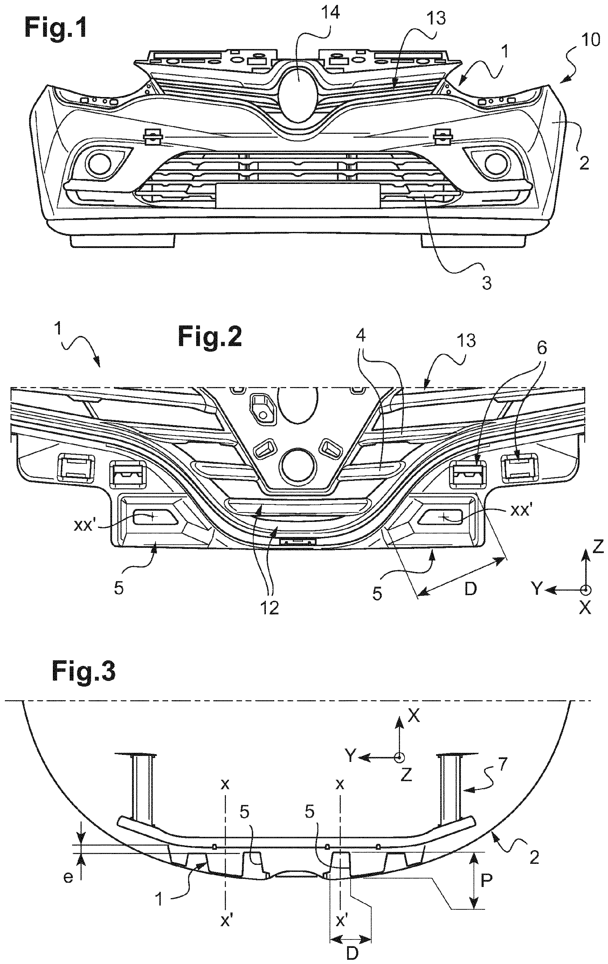

Tel qu'illustré sur la figure 1, une face avant 10 de véhicule, comprend un premier élément 1 intégrant une grille supérieure 13, portant accessoirement ici un logo distinctif 14, représentatif de la marque ou de l'identité du véhicule. Une portion inférieure de l'élément, non visible sur la figure 1, est masquée à la vue par une peau 2 de bouclier, derrière laquelle peuvent être disposés différents éléments d'absorption d'énergie du choc (non représenté sur la figure 1).

La peau de bouclier 2 sépare, dans le sens de la verticale z du véhicule, la grille supérieure 13, d'un autre élément formant grille inférieure 3. Selon une variante de réalisation non représentée, la grille supérieure et la grille inférieures peut appartenir au même élément monobloc, recouvert par une portion de peau de bouclier.

La face avant 10 est ici représentée sans montrer la structure de caisse sur laquelle elle est assemblée. Sur les figure, les directions caractéristiques de l'élément formant grille sont celles de l'élément monté sur le véhicule, à savoir une direction X longitudinale du véhicule, dirigé de l'avant vers l'arrière du véhicule, une direction Y transversale au véhicule et dirigée vers la droite, et une direction verticale Z, dirigée vers le haut.

On retrouve sur la figure 2 des éléments communs à la figure 1, les mêmes éléments étant désignés par les mêmes références. L'élément 1 formant grille est ici une pièce moulée monobloc qui peut être par exemple moulée en matière thermoplastique suivant des techniques connues.

L'élément 1 formant grille, comporte notamment, au niveau d'une portion ajourée de la grille 13, des barreaux 4, qui pourraient, selon des variantes de réalisation être remplacés par exemple par une structure de grille à barreaux croisés au lieu de la structure à barreaux parallèles illustré. Sous la structure ajourée 13, sont prévus différents caissons 5 et 6. Chaque caisson comporte au moins deux portions de parois se faisant face, et sensiblement parallèles à la direction longitudinale X du véhicule. Les structures de caisson 5, 6 sont intégrés de manière monobloc au même élément 1 formant la grille 13.

Des caissons 6 de profondeur modérée, typiquement de profondeur comparable à la profondeur, selon l'axe X, de la portion ajourée 13, permettent d'assurer diverses fonctions telles que des point d'appui de l'élément 1 contre la caisse du véhicule (non représentée sur la figure). Dans l'exemple représenté, les caissons 5 sont des caissons principaux, situés intérieurement par rapport à la direction transversale Y du véhicule, c'est-à-dire à proximité d'un plan médian vertical longitudinal du véhicule, tandis que les caissons 6 sont des caissons secondaire, facultatifs, situés extérieurement par rapport à la direction transversale Y du véhicule, c'est-à-dire à une plus grande distance d'un plan médian vertical longitudinal du véhicule..

Les structures de caisson 5, disposées de manière symétrique par rapport à un plan médian longitudinal du véhicule (plan parallèle aux axes X-Z), comportent chacune une portion de poutre creuse à section fermée, d'axe sensiblement parallèle à l'axe longitudinal du véhicule (s'écartant par exemple de moins de 20° de la direction longitudinale du véhicule). La profondeur de la portion de poutre creuse selon cette même direction longitudinale est sensiblement supérieure, par exemple au moins 1,5 fois supérieure ou au moins deux fois supérieure à la profondeur de la portion ajourée 13. Au moins une portion de poutre creuse de chaque caisson 5 peut s'évaser vers l'avant du véhicule, et se refermer vers l'arrière de l'élément 1 (arrière suivant la direction du véhicule) par une portion de paroi sensiblement verticale et transversale au véhicule, cette portion de paroi étant conçue pour venir se positionner face à une surface avant de traverse avant du véhicule, de manière à être au repos, espacé de la traverse, et à venir s'appliquer contre la traverse sous l'effet d'un choc d'un objet venant percuter le véhicule par l'avant. La traverse avant est une poutre s'étendant transversalement au véhicule, sensiblement suivant l'axe Y transversal au véhicule.

Les deux portions de poutres creuses des caissons 5 peuvent contribuer à absorber de l'énergie de choc lorsqu'une force de compression vient être appliquée sur l'élément 1 au travers, par exemple, de la peau de pare-chocs 2.

On remarque qu'au moins deux caissons 5 sont reliés, suivant la direction Y, par un ou plusieurs ponts de matière 12, également intégrés de manière monobloc à l'élément 1, le ou les ponts de matière reliant des contours d'extrémité avant des portions de poutre creuse des caissons 5. Les portions de liaisons transversales 12 reliant les deux caissons 5 permettent notamment, lorsqu' un choc est appliqué entre les deux caissons, ou au droit d'un des caissons, d'éviter un excès de flexion latérale du caisson le plus proche du point d'impact, vers l'extérieur du véhicule. Le ou les ponts de matière 12 permettent aussi, éventuellement, de retransmettre une partie de l'effort de choc dirigé suivant l'axe X, à au moins un autre parmi les caissons.

Cette redistribution des efforts vers un caisson plus éloigné du point d'impact, est d'autant plus efficace que les portions de liaison transversales 12 présentent des section formant goulotte, rigidifiant ces ponts de matière qui fonctionnent ainsi comme des poutres creuses de section à contours ouverts.

Tel que visible sur la coupe de la figure 3, l'arrière de chacun des caissons 5 est disposé en face d'une même poutre transversale 7 du véhicule. Comme mentionné précédemment, lors d'un choc frontal sur la face avant 10, l'élément 1 reste ainsi maintenu en avant de la traverse 7.

Dans un tel cas de choc, c'est donc la déformation des éléments de caisson 5 recouverts par la peau de bouclier 2, qui détermine la cinétique de déformation de l'élément 1 et la cinétique de décélération par exemple de la jambe du piéton percuté.

On note en particulier que les caissons 5 formant poutre creuse, sont recouverts de leur côté évasé (i.e. leur côté tourné vers l'avant du véhicule en position assemblée) par la peau de bouclier 2, qui est assemblée au contact des contours d'extrémité de ces caissons 5. Un jeu "e" suivant la direction X est en revanche ménagé entre la poutre 7 et l'arrière des caissons 5, de manière à tenir compte des dispersions de fabrication et d'assemblage des différentes pièces. Le jeu "e" est réduit, typiquement inférieur ou égal à la profondeur "f" de la portion ajourée.

La peau de bouclier renforce ainsi le maintien en latéral des extrémités des portions de poutres creuses déjà assuré en partie par les ponts de matière 12 intégrés à l'élément 1.

On remarque que l'arrière des caissons 5 comporte de préférence une portion de paroi plane faisant face à la traverse 7, de manière à améliorer l'efficacité de l'appui de chaque caisson 5 sur le traverse 7, et de manière à limiter des effets locaux de flambement des parois de la poutre creuse 5 au contact de la traverse 7.

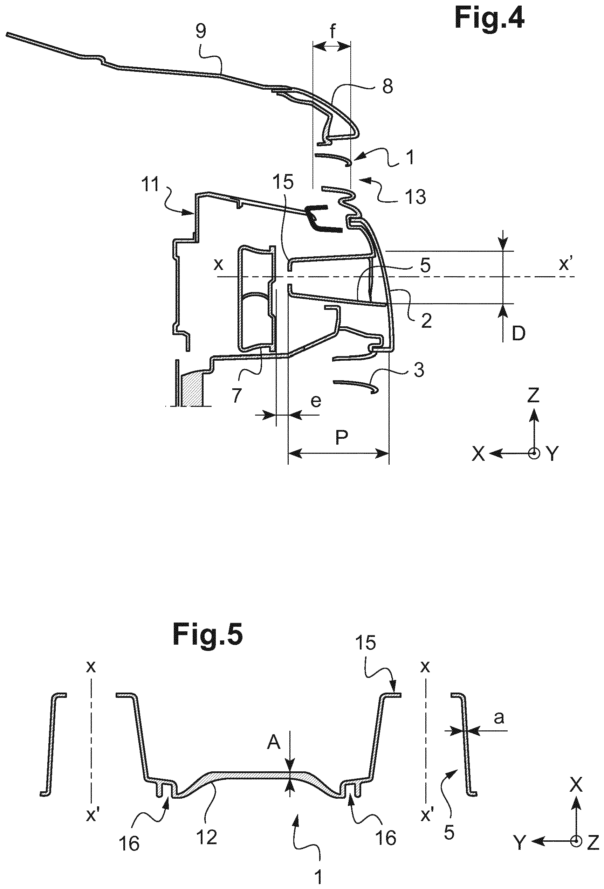

La figure 4 illustre le positionnement vertical de l'élément de grille 1, notamment le positionnement de la portion formant poutre creuse 5, par rapport à une traverse avant 7 d'un véhicule sur lequel est monté l'élément de grille 1. L'élément de grille 1 peut être maintenu par différents points d'assemblage -non illustrés sur les figures-, avec une portion avant 11 de la caisse du véhicule. L'élément 1 de grille peut être situé partie supérieure de la face avant, à proximité d'un capot 9 du véhicule. Une portion supérieure de l'élément de grille 1 peut être éventuellement recouverte par un rebord de caisse 8.

Comme visible sur les figures 2 et 4, pour être apte à absorber suffisamment d'énergie de choc, le caisson présente ici un plus grand diamètre intérieur D de contour fermé de la poutre creuse strictement supérieur à la profondeur f de la portion ajourée 13. Le caisson peut présenter une profondeur P selon la direction X d'avancement du véhicule supérieure ou égale à ce plus grand diamètre D. La profondeur P est typiquement supérieure ou égale à 50mm.

Comme visible sur la figure 4, les caissons 5 forment sensiblement une surface réglée démoulable vers l'avant des caissons (par rapport à la position assemblée sur le véhicule). La surface réglée peut être évasée vers l'avant et se refermer vers l'arrière par des parois de fond 15 formant le fond des caissons. Les parois de fond peuvent être et sensiblement perpendiculaires à la direction d'avancement X du véhicule. Elles peuvent être ouvertes en partie centrale.

De préférence, des parois de fond 15 se trouve chacune face à une surface d'appui correspondante de la traverse 7, de manière à ce que l'intégralité de chaque paroi de fond15 puisse venir, en cas de choc, en appui au contact de la traverse 7.

La figure 5 illustre une coupe partielle de l'élément de grille 1 dans un plan horizontal passant par les caissons 5 et passant par l'une des portions de liaison transversale 12 de l'élément 1.

Comme illustré sur la figure 5, l'épaisseur "A" de paroi au niveau de la portion de liaison transversale 12, peut être avantageusement plus élevée qu'une épaisseur "a" de paroi moyenne au niveau des parois formant la portion de poutre creuse s'étendant suivant l'axe X du caisson 5.

De cette manière, on améliore la rigidité de l'ensemble {caisson + portion de liaison} dans le sens transversal au véhicule, tout en limitant la rigidité dans le sens longitudinal, de manière à limiter le pic de décélération de la jambe d'un piéton éventuellement impacté par l'avant du véhicule.

On remarque également sur la figure 5, des rainures 16 ménagées sur la surface avant de l'élément 1, lesdites rainures permettant de solidariser au moins une portion de contour avant de chacun des caissons 5 et la peau de bouclier 2, de manière à améliorer encore la rigidité transversale de l'ensemble comme déjà mentionné précédemment.

L'invention ne se limite pas aux exemples de réalisation décrits et peut se décliner en de nombreuses variantes. Suivant les rigidités souhaitées pour les portions de poutre creuses dans le sens longitudinal, les portions des caissons 5 pourraient comporter des nervures longitudinales sur l'extérieur et/ou sur l'intérieur des portions de caisson 5 formant poutre creuse.

L'élément 1 pourrait comporter un seul caisson central, ou au contraire ou de préférence comporter plus de deux caissons, par exemple un caisson central et deux caissons latéraux symétriques, ou encore quatre caissons répartis symétriquement de part et d'autre de l'axe médian du véhicule.

La grille moulée avec les caissons d'absorption de choc pourrait être une grille inférieure du véhicule tel que la grille 3, les caissons se trouvant par exemple au-dessus de la partie ajourée de la grille.

Du fait de l'intégration des caissons 5 à l'élément de grille 1 s'étendant transversalement au véhicule, le maintien des caissons 5 est amélioré transversalement au véhicule par rapport à un système comportant des caissons d'absorption de choc rapportés. On peut ainsi obtenir une meilleure reproductibilité des énergies restituées en fonction de différentes direction/différents points d'impact. La pièce de grille selon l'invention permet également de réduire les coûts de fabrication et d'assemblage du véhicule.

## Revendications

1. Elément moulé (1) formant grille d'aération pour face avant de véhicule automobile, comprenant une portion ajourée (13) formant grille d'aération, et s'étendant sur une première profondeur (f) suivant la direction d'avancement (X) du véhicule, et comprenant, moulé monobloc dans la même pièce (1) que la portion ajourée (13), au moins un caisson (5) formant absorbeur de choc, placé de manière à être monté devant une traverse avant (7) du véhicule, le caisson (5) formant poutre creuse à section à contour fermé autour d'un axe géométrique de poutre (xx') étant orienté pour être monté sensiblement parallèle à la direction d'avancement (X) du véhicule, **caractérisé en ce que** le caisson (5) formant poutre creuse s'évase vers la face qui est destinée à être tournée vers l'avant du véhicule, et est formé par une surface réglée dont au moins une partie des génératrices sont sensiblement parallèles à l'axe d'avancement (X) du véhicule, le caisson (5) se refermant du côté de la face arrière de l'élément, par une portion de surface plane (15) destinée à être positionnée selon une direction sensiblement perpendiculaire à la direction d'avancement (X) du véhicule.

2. Ensemble de face avant de véhicule comprenant un élément (1) selon la revendication 1, ainsi qu'une peau de bouclier (2) configurée pour recouvrir l'extrémité évasée du caisson (5) une fois la peau de bouclier (2) assemblée sur l'élément (1) formant grille.

3. Ensemble de face avant de véhicule selon la revendication 2, l'élément (1) portant sur au moins une portion du pourtour de l'extrémité évasée du caisson (5), une rainure (16) -respectivement une nervure-, complémentaire d'une nervure -respectivement d'une rainure- ménagée sur la face arrière de la peau de bouclier (2).

4. Ensemble de face avant de véhicule comprenant un élément (1) selon la revendication 3, ainsi qu'une traverse avant (7) configurée pour être monté face à la portion de surface plane (15).

5. Ensemble de face avant de véhicule selon l'une quelconque des revendications 2 à 4, ou selon la revendication 4 combinée avec l'une des revendications 2 ou 3, comportant au moins deux desdits caissons (5) disposés symétriquement de part et d'autre d'un plan médian longitudinal vertical du véhicule

6. Ensemble de face avant de véhicule selon la revendication 5, dans lequel l'élément comprend deux desdits caissons (5), chaque caisson étant formé par des portions de parois d'épaisseur sensiblement constante (a), et l'élément comprend entre les caissons, reliant les caissons, au moins une portion de surface de liaison (12) transversale au véhicule. et d'épaisseur de paroi (A) supérieure ou égale à l'épaisseur de paroi (a) des caissons (5).

7. Véhicule automobile comprenant un ensemble de face avant selon l'une quelconque des revendications 2 à 6.

## Patentansprüche

1. Formelement (1), das ein Belüftungsgitter für ein Frontblech eines Kraftfahrzeugs bildet, das einen ein Belüftungsgitter bildenden durchbrochenen Abschnitt (13) enthält und sich über eine erste Tiefe (f) gemäß der Vorwärtsbewegungsrichtung (X) des Fahrzeugs erstreckt, und einstückig im gleichen Bauteil wie der durchbrochene Abschnitt (13) geformt mindestens einen einen Stoßdämpfer bildenden Kasten (5) enthält, der so angeordnet ist, dass er vor einen vorderen Querträger (7) des Fahrzeugs montiert wird, wobei der Kasten (5), der einen Hohlbalken mit einem Querschnitt mit geschlossener Kontur um eine geometrische Balkenachse (xx') bildet, ausgerichtet ist, um im Wesentlichen parallel zur Vorwärtsbewegungsrichtung (X) des Fahrzeugs montiert zu werden, **dadurch gekennzeichnet, dass** der einen Hohlbalken bildende Kasten (5) sich zu der Seite hin ausweitet, die dazu bestimmt ist, zur Vorderseite des Fahrzeugs gerichtet zu sein, und von einer Regelfläche gebildet wird, von der mindestens ein Teil der Mantellinien im Wesentlichen parallel zur Vorwärtsbewegungsachse (X) des Fahrzeugs ist, wobei der Kasten (5) sich auf der Seite der Rückseite des Elements durch einen ebenen Flächenabschnitt (15) schließt, der dazu bestimmt ist, gemäß einer Richtung im Wesentlichen lotrecht zur Vorwärtsbewegungsrichtung (X) des Fahrzeugs positioniert zu werden.

2. Frontblecheinheit eines Fahrzeugs, die ein Element (1) nach Anspruch 1 sowie eine Stoßfängerschale (2) enthält, die konfiguriert ist, das ausgeweitete Ende des Kastens (5) zu bedecken, wenn die Stoßfängerschale mit dem ein Gitter bildenden Element (1) zusammengebaut ist.

3. Frontblecheinheit eines Fahrzeugs nach Anspruch 2, wobei das Element (1) auf mindestens einem Abschnitt der Umrandung des ausgeweiteten Endes des Kastens (5) eine Rille (16) -bzw. eine Rippeträgt, die komplementär zu einer Rippe -bzw. einer Rille- ist, die an der Rückseite der Stoßfängerschale (2) eingerichtet ist.

4. Frontblecheinheit eines Fahrzeugs, die ein Element (1) nach Anspruch 3 sowie einen vorderen Querträger (7) enthält, der konfiguriert ist, gegenüber dem ebenen Flächenabschnitt (15) montiert zu werden.

5. Frontblecheinheit eines Fahrzeug nach einem der Ansprüche 2 bis 4 oder nach Anspruch 4 kombiniert mit einem der Ansprüche 2 oder 3, die mindestens zwei Kästen (5) aufweist, die symmetrisch zu beiden Seiten einer senkrechten Längsmittelebene des Fahrzeugs angeordnet sind.

6. Frontblecheinheit eines Fahrzeugs nach Anspruch 5, wobei das Element zwei Kästen (5) enthält, wobei jeder Kasten von Wandabschnitten einer im Wesentlichen konstanten Dicke (a) gebildet wird, und das Element zwischen den Kästen mindestens einen die Kästen verbindenden Verbindungsflächenabschnitt (12) quer zum Fahrzeug und mit einer Wanddicke (A) größer als die oder gleich der Wanddicke (a) der Kästen (5) enthält.

7. Kraftfahrzeug, das eine Frontblecheinheit nach einem der Ansprüche 2 bis 6 enthält.

## Claims

1. Moulded element (1) forming an air vent grille for a front end of a motor vehicle, comprising a perforated portion (13) forming an air vent grille and extending over a first depth (f) in the direction of forward travel (X) of the vehicle, and comprising, moulded as one piece into the same component (1) as the perforated portion (13), at least one box structure (5) forming a shock absorber, positioned in such a way as to be mounted in front of a front crossmember (7) of the vehicle, the box structure (5) forming a hollow beam the cross section of which has a closed contour about a geometrical beam axis (xx'), being oriented in such a way as to be mounted substantially parallel to the direction of forward travel (X) of the vehicle, **characterized in that** the box structure (5) forming a hollow beam widens towards the face that is intended to face towards the front of the vehicle, and is formed by a surface with a straight-line genitrix at least part of the genitrices of which are substantially parallel to the axis of forward travel (X) of the vehicle, the box structure (5) being closed on the side of the rear face of the element, by a planar surface portion (15) intended to be positioned in a direction substantially perpendicular to the direction of forward travel (X) of the vehicle.

2. Vehicle front end assembly comprising an element (1) according to Claim 1, and a bumper skin (2) configured to cover the widened end of the box structure (4) once the bumper skin (2) has been assembled on the air vent grille forming element (1).

3. Vehicle front end assembly according to Claim 2, the element (1) bearing, on at least a portion of the periphery of the widened end of the box structure (5), a groove (16) or, respectively, a rib, complementing a rib or, respectively, a groove, formed on the rear face of the bumper skin (2).

4. Vehicle front end assembly comprising an element (1) according to Claim 3, and a front crossmember (7) configured to be mounted facing the planar surface portion (15).

5. Vehicle front end assembly according to any one of Claims 2 to 4 or according to Claim 4 combined with one of Claims 2 and 3, comprising at least two of the said box structures (5) positioned symmetrically on each side of a vertical longitudinal mid plane of the vehicle.

6. Vehicle front end assembly according to Claim 5, in which the element comprises two of the said box structures (5), each box structure being formed by wall portions of substantially constant thickness (a), and the element comprises, between the box structures, connecting the box structures, at least one connecting surface portion (12) transverse to the vehicle and having a wall thickness (A) greater than or equal to the wall thickness (a) of the box sections (5).

7. Motor vehicle comprising a front end assembly according to any one of Claims 2 to 6.
